# EUROPEAN PATENT SPECIFICATION

(11) **EP 0 580 043 B1**
(45) Date of publication and mention of the grant of the patent: **17.12.1997**
(21) Application number: 93111044.9
(22) Date of filing: 09.07.1993
(51) Int. Cl.: G11B 17/22

(54) **Multidisk player mechanism**
Mehrplattenspielermechanismus
Mécanisme de lecteur multi-disques

(30) Priority: 14.07.1992 JP 209544/92; 14.07.1992 JP 55178/92 U; 14.07.1992 JP 55179/92 U
(43) Date of publication of application: 26.01.1994
(73) Proprietor: KABUSHIKI KAISHA KENWOOD, Shibuya-ku Tokyo (JP)
(72) Inventor: Takahashi, Makoto, Oume-shi, Tokyo (JP); Horibe, Makoto, Hino-shi, Tokyo (JP); Fujita, Yoshihiro, Mitaka-shi, Tokyo (JP)
(74) Representative: Patentanwälte Leinweber & Zimmermann

(56) References cited:
- EP-A- 0 386 708
- US-A- 4 737 945
- US-A- 4 797 865
- US-A- 4 841 499

## Description

### BACKGROUND OF THE INVENTION

### Field of the Invention

The present invention relates to a multidisc player, particularly to its disc loading mechanism, wherein a desired disk is played by selecting it from a plurality of disks housed within a magazine in a stacked manner or from a single disk loaded in a loading tray and taken into the player, and the mechanism of a door which covers the front of the magazine and/or loading tray.

### Related Background Art

There is known a disc player having a plurality of disks housed within a magazine as well as a loading tray for a single disk which is taken into the player. Therefore, the operator can select not only a desired one from the discs within the magazine, but also any desired one which is not accommodated within the magazine.

Such a disc player is disclosed in US-A-4 797 865.

With a conventional loading mechanism for such a multidisc player, two drive mechanisms have been used separately for taking the loading tray into the player and for taking in/out each disc tray placed within the magazine.

EP-A-03 867 08 discloses a disc player for reading a plurality of discs housed within a magazine comprising a circular tray rotatably mounted on a base for supporting a plurality of discs. A pick-up is vertically moved up and down for loading on disc in the turntable. A single motor coupled to an idle gear drives both the rotating tray and the pick-up according to the direction of rotation of said motor.

Provision of the two drive mechanisms for separately driving the loading tray and disk trays in the conventional multidisc player mechanism results in a number of components such as motors and gears, making it difficult to reduce the size of the loading mechanism. Further, the open and close of the door which covers the front of the magazine and/or loading tray are driven by an additional drive mechanism.

### SUMMARY OF THE INVENTION

It is therefore an object of the present invention to solve the above problem and provide a loading mechanism for a multidisc player capably of driving both the loading tray and disc trays and also the open and close of the front door by a single drive mechanism.

The invention is defined in claim 1 and in the appended claims.

### BRIEF DESCRIPTION OF THE DRAWINGS

Fig.1 is a perspective view of one embodiment of the multidisc player according to the invention in a disassembled form.

Fig.2 is a perspective view of epicyclic gear mechanism used in the embodiment of Fig.1 in a disassembled form.

Fig.3 is a perspective view of door mechanism used in the embodiment of Fig.1 in a disassembled form.

Fig.4 is a perspective view of memory mechanism used in the embodiment of Fig.1 in a disassembled form.

### DETAILED DESCRIPTION OF THE PREFERRED EMBODIMENTS

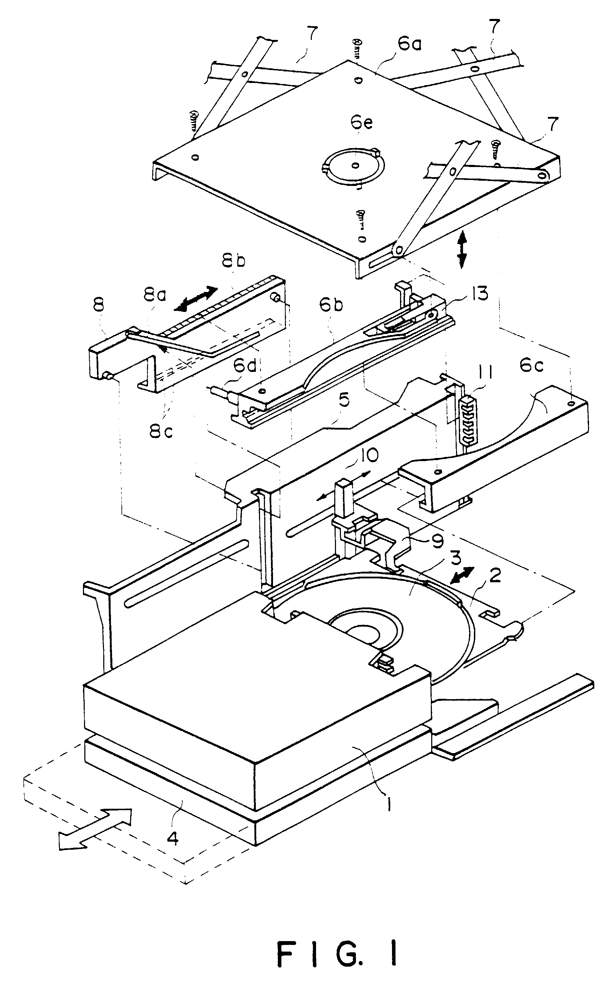

An embodiment of the present invention will be described with reference to the accompanying drawings. Fig.1 is a perspective and exploded view of the loading mechanism for a multidisc player according to an embodiment of the present invention. In Fig.1, reference numeral 1 represents a magazine having shelves for placing thereon a plurality of disk trays 2, 2,...., in this embodiment, six trays 2, 2,... each for housing a disk 3. The magazine 1 is mounted on the player as shown in Fig.1. Although the casing and locking mechanism for the magazine 1 are mounted on the chassis of the player, they are not shown in Fig.1.

Reference numeral 4 represents a loading tray for mounting thereon a disk not prepared in the magazine 1 and for playing the disk. This loading tray 4 can mount only one disk tray and is driven to move between the position in the housing indicated by a solid line and the position extending out of the housing indicated by a broken line.

Loading chassis right and left guides 6c and 6b are fixedly mounted on a loading chassis upper plate 6a by screws, to form a loading chassis 6. This loading chassis 6 is supported and moved by pantagraph mechanisms 7,7,... in the vertical direction. The loading chassis 6 can load a tray 2 in the magazine 1 and move it in the vertical direction.

A pin 6d is set to the loading chassis left guide 6b. The pin 6d engages with a cam groove 8a formed in a loading chassis elevating plate 8 which is supported by a side chassis 5 to move in a slidable manner in the forward/backward or horizontal direction. The elevating plate 8 is transported in the forward/backward direction by a gear (not shown) meshing with a rack 8b.

The loading chassis 6 is driven in the vertical direction by the operation of the pin 6d engaged with the cam groove 8a when the loading chassis elevating plate 8 is moved. The positions of shelves of the magazine 1 and loading tray 4 are detected when light from a photo interrupter passes through holes 8c, 8c,... formed in the elevating plate 8.

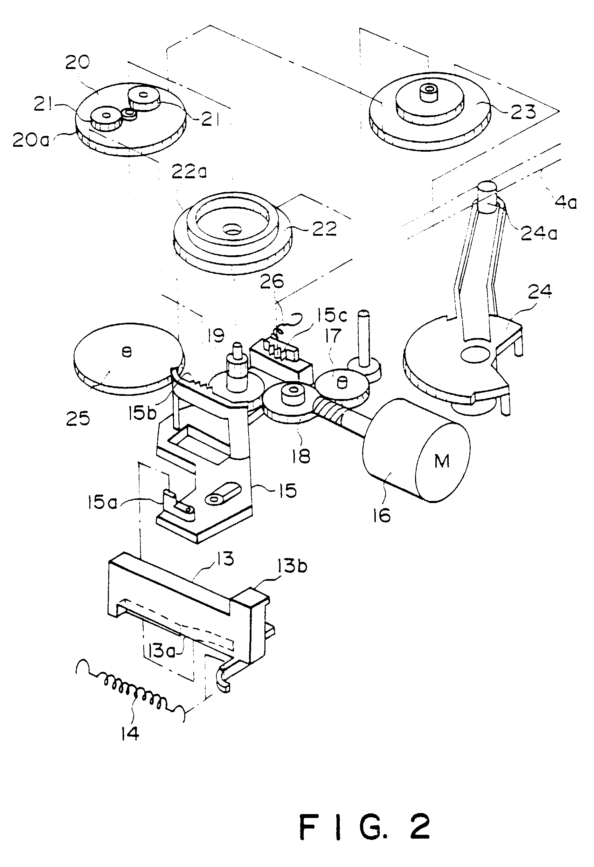

A loading arm 9 is fitted in a guide groove formed in the loading chassis left guide 6b, can move in the horizontal direction along the guide groove, and can also move in the vertical direction together with the loading chassis. A rod 10 engaging with a recess formed in the loading arm 9 is supported by the side chassis 5 and allowed to move in the horizontal direction by the drive mechanism shown in Fig.2 meshing with a rack 10a formed integrally with the rod 10.

The loading arm 9 also engages with a recess of the disc tray 2. As the loading arm 9 is driven by the rod 10 in the horizontal direction, it guides the disc tray 2 in the magazine 1 or loading tray 4 into grooves formed in the loading chassis 6.

An engaging member 11 is supported by the side chassis 5 and allowed to slide in the vertical direction. The engaging member 11 is energized in the vertical direction by a coil spring (not shown), and abuts a stopper (not shown) in an ordinary state. The engaging member is formed with recesses 11a, 11a,... corresponding in height to respective disc trays, assuming that the engaging member 11 has been energized in the vertical direction and has abut the stopper. The height of the uppermost disc tray in the magazine 1 corresponds to the upper space of the engaging member 11, and that of the disc tray 2 on the loading tray 4 corresponds to the lower space thereof.

A stopper 13 is supported by the loading chassis left guide 6b in a slidable manner, and energized by a coil spring. The stopper 13 is in tight contact with a step of the left guide 6b in an ordinary state. In this state, the stopper 13 does not enter the recess 1a so that it remains still even if the loading chassis 6 moves in the vertical direction. When the loading arm 9 takes the disc tray 2 into the loading chassis, the loading arm 9 pushes the stopper 13 to make it engage with the recess 11a of the engaging member 11.

Next, when the loading chassis 6 lowers to the playing position, the disc 3 on the disk tray 2 is placed on the turn-table of a spindle motor (not shown), and clamped on the turn-table by a clamper 6e which is supported by the loading chassis upper plate 6a in a floating manner. In this manner, the disc 3 is played.

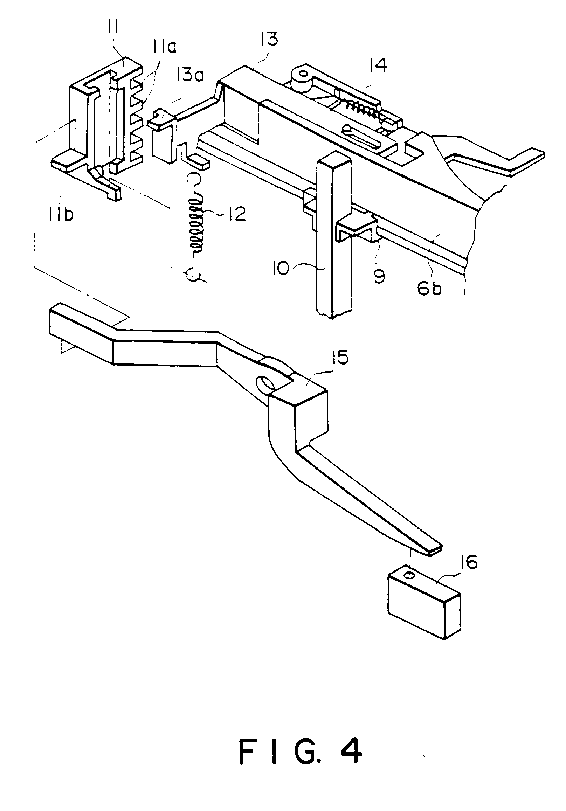

In taking the disc back to the magazine after the disc play, the loading chassis 6 rises together with the engaging member 11. Referring to Fig.4, the engaging member 11 at the raised position makes a lever 15 rotatably supported by the side chassis 5 rotate in the clockwise direction by using its projection 11b and activate a micro switch 16 so that the completion of raising the loading chassis 6 can be detected. However, when the disc on the loading tray 4 is played, the engaging member 11 will not lower and the micro switch 16 takes an activated state. This activated state is detected by an output from the micro switch.

Immediately after the completion of raising the loading chassis 6 is detected, the photo interrupter detects that light passed through the holes 8c, 8c,... of the loading chassis elevating plate 8. The loading chassis elevating plate 8 is stopped at this time.

When the loading chassis elevating plate 8 is stopped, the disc tray on the loading chassis 6 is at the position flush with the shelf on which the disc tray was first placed. Under this condition, the loading arm 9 moves to place the disc tray on the original shelf.

When another disc is to be played, the loading arm 9 is moved to the inside of the magazine and the loading chassis 6 is moved in the vertical direction to engage the loading arm 9 with the disc tray 2 of the disc to be played. Then, the disc is taken out of the magazine 1.

Fig.2 shows the details of the rod 10 for taking out the disc tray 2 in the magazine 1 or on the loading tray 4, and the drive mechanism for moving the loading tray to the inside of the player. A motor 16 is mounted on the player chassis. A worm gear fixed on the shaft of the motor 16 meshes with a worm wheel 17 rotatably mounted on the player chassis. A small gear integrally formed with the worm wheel 17 meshes with a gear 18 which in turn meshes with a large gear of a driving sun gear 19 rotatably supported on the player chassis.

A driven gear 22 and a carrier 20 are supported coaxially on the driving sun gear 19. The carrier 20 is shown upside down in Fig.2. Two epicyclic gears 21 rotatably supported on shafts mounted on the carrier 20 mesh with a small gear of the driving sun gear 19 and with inner teeth of the driving gear 22. The driving sun gear 19, carrier 20, epicyclic gears 21, and driven gear 22 constitute an epicyclic gear mechanism. Outer teeth 22a of the driven gear 22 generate a first output of the epicyclic gear mechanism, outer teeth 20a of the carrier 20 generate a second output, and the driving sun gear 19 coupled to the motor 19 supplies an input drive force to the epicyclic gear mechanism.

The outer teeth 22a of the driven gear 22 mesh with a gear 25 rotatably mounted on the player chassis, and the gear 25 meshes with a rack 10a integrally formed with the rod 10. Namely, the first output from the outer teeth 22a of the driven gear 22 drive the rod 10 to take in and out the disc tray 2.

The outer teeth 20a of the carrier 20 mesh with a carrier gear 23 rotatably supported by the player chassis to generate the second output. A small gear of the carrier gear 23 meshes with a segment gear 24 rotatably supported by the player chassis. The carrier gear 23 is shown upside down in Fig.2. A pin 24a integrally formed with the segment gear 24 engages with a groove 4a formed in the bottom wall of the loading tray 4 shown in Fig.1. Namely, the second output of the epicyclic gear mechanism is used to move the loading tray to the inside of the player chassis.

A slider 15 is supported on the player chassis in a slidable manner, and energized in the upper right direction as viewed in Fig.2 by a coil spring 26. Teeth 15b and 15c and a projection 15a of the slider 15 face the outer teeth 20a and 22a and a cam surface 13a of a slider operating member 13, respectively.

The slider operating member 13 is supported by the side chassis 5 shown in Fig.1 in a slidable manner, and energized by a coil spring 14. A projection 13b of the slider operating member 13 positions on a passage of a step 8d of the loading chassis elevating plate 8. Namely, when the elevating plate 8 moves in the forward/backward direction, the slide operating member 13 is driven to mesh the teeth 15b or 15c with the corresponding gear to inhibit the rotation of the gear.

When the loading chassis elevating plate 8 is in a forward moved state, i.e., when the loading chassis 6 lowers to enter the disc play state, the slider operating member 13 is pushed by the loading chassis elevating plate 8 to move forward, and the slider 15 is pushed by the cam surface 13a to move in the lower left direction as viewed in Fig.2. Then, the teeth 15c inhibit the rotation of the outer teeth 22a. Under this condition, when the motor 16 is driven, the driving sun gear 19 rotates to drive the outer teeth 20a of the carrier 20 and generate the second output of the epicyclic gear mechanism. Namely, when the motor 16 rotates, the epicyclic gear mechanism operates to move the loading tray 4 to the inside of or the outside of the player.

When the loading chassis elevating plate 8 takes a backward moved state, i.e., when the loading chassis 6 rises to the height corresponding to a shelf of the magazine, the slider operating member 13 is moved backward by the force of the coil spring 14 and the slider 15 is moved to the upper right direction by the force of a coil spring 26. Then, the teeth 15b inhibit the motion of the outer teeth 20a. Under this condition, when the motor 16 is driven, the driving sun gear 19 rotates to drive the outer teeth 22a of the driven gear 22 and generate the first output of the epicyclic gear mechanism. Namely, when the motor 16 rotates, the epicyclic gear mechanism operates to move the loading arm 9 and transport the disk tray 2.

In the epicyclic gear mechanism of a one-input to two-outputs type, the second output side is mechanically locked if the first output is to be generated from the input, and the first output side is mechanically locked if the second output is to be generated from the input. The first and second output sides can be selectively locked. This locking mechanism can be achieved by the forward/backward motion of the elevating plate 8 which moves the loading chassis 6 in the vertical direction.

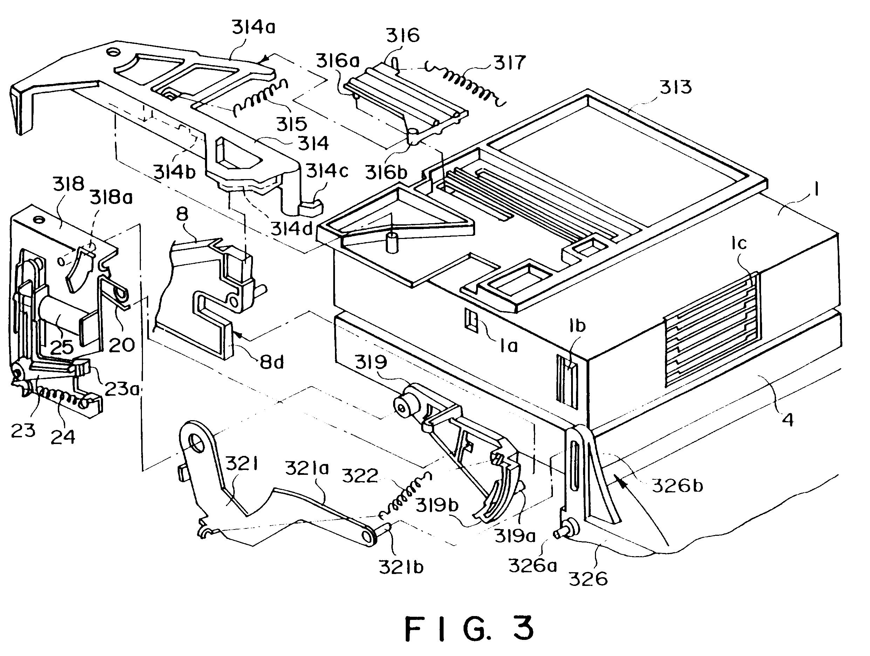

Fig.3 shows the locking mechanism and door open/close mechanism of the magazine. A magazine case upper plate 313 supports a pushing member 316 in the space to a chassis upper plate (not shown) in a slidable manner, and also supports a locking member 314 in a rotatable state.

A hook 316a for coupling the rear portion of the magazine 1 is formed on the pushing member 316, and energized in the forward direction by a coil spring 317. A front projection 316 abuts a cam surface 314a of the locking member 314.

The locking member 314 is formed with a hook 314b for coupling a recess 31a of the magazine 1 and with a projection 314c for pushing a lock release button 31b. The locking member 314 is energized by a coil spring in the counter-clockwise direction.

A bracket 318 fixed to the chassis by means of screws is provided with a shaft 318a on which an intermediate lever 319 is rotatably mounted. A door open/close lever 321 is rotatably and coaxially supported by the intermediate level 319.

The intermediate lever 319 is energized by a torsion coil spring 320 in the clockwise direction. A coil spring 322 extended between the intermediate lever 319 and door open/close lever 321 operates to make the end face 321a of the door open/close lever 312 in tight contact with the intermediate lever 319.

A door 320 is pivotally supported on the chassis using as its pivot shaft a shaft 326 mounted on one side of the door 326. A pin 321b which engages with a guide groove 326b formed in the arm of the door is mounted on the door open/close lever 321. A projection 319a formed on the intermediate lever 19 abuts the end face 8d of a loading chassis elevating plate 8.

A stopper 323 is rotatably supported by the bracket 318, and energized in the counter-clockwise direction by a coil spring 324. A solenoid 325 fixed to the bracket 318 rotates the stopper 323 in the clockwise direction against the force of the coil spring 324 when it is powered on. The end face 323a of the stopper 323 engages with the end face 319b of the intermediate lever 319.

In operation, when the magazine 1 is pushed into the magazine case, the magazine 1 couples the hook 316a of the pushing member 316 to move the pushing member 316 backward against the force of the coil spring 317. Then, the locking member 14 rotates in the counter-clockwise direction by the force of the coil spring 314 with the cam surface 314a following the projection 316b. As a result, the hook 314b engages with the magazine 1 and the projection 314c releases the lock of the disc tray in the magazine 1 to enter the loading state of the magazine 1.

When the loading chassis elevating plate 8 moves to the front, the upper front end of the plate 8 pushes the inner inclined surface 314d of the locking member 314 so that the locking member 14 rotates to release the lock state of the magazine. At this time, the pushing member 316 pushes the magazine 1 out of the case by the force of the coil spring 317.

Under the condition that the door 326 is open as shown in Fig.3, the intermediate lever 319 and door open/close lever 321 have been rotated in the counter-clockwise direction and the end face 323a of the stopper 323 is engaging with the end face 319b of the intermediate lever 319. Under this condition, even if the loading chassis elevating plate 8 is moved backward, the door is maintained in an open state, allowing to replace a disc with a new one. In this case, the operation of replacing the disc can be looked through a transparent plate 31c of the magazine 1. When the door 326 is manually closed, the door open/close lever 321 pivots in the clockwise direction against the force of the coil spring 322. When the door 326 is untouched, it is opened by the force of the coil spring 322.

In closing the door 326 with the open/close mechanism, the solenoid 325 is energized to rotate the stopper 323 in the clockwise direction so that the lock state of the intermediate lever 319 is released. The projection 319a is made in tight contact with the end face 8d of the loading chassis elevating plate 8 by the force of the coil spring 320 so that the intermediate lever 319 rotates in the clockwise direction as the elevating plate 8 moves backward, closing the door 326 silently.

In opening the door 326, the loading chassis elevating plate 8 is moved forward to push the projection 319a with its end face 8d so that the intermediate lever 19 rotates in the counter-clockwise direction. In the open state of the door 326, the stopper 323 rotates in the counter-clockwise direction by the force of the coil spring 324 to lock the intermediate lever 319. Since there is formed a play space in the end face 8d of the loading chassis elevating plate 8, the elevating plate 8 moves further forward allowing the lock state of the magazine 1 to be released.

In the above embodiment, a multidisc player for selecting a desired disc in the magazine has been described by way of example. The invention is also applicable to a disc player for playing only a disk placed on the loading tray. In this case, the door mounted on the front side of the loading tray may be opened or closed using a mechanism similar to the above-described mechanism by opening or closing the intermediate lever by means of the slider. Since the door is maintained open while the loading tray is taken in or out relative to the player, there is no friction between the loading tray and door, generating no vibrations and sounds.

## Claims

1. A multidisc player provided with a magazine (1) which contains a plurality of disc trays (2),
a loading tray (4) which contains a single disc tray (2),
first drive means (10, 10a, 25) for taking out the disc trays (2) from the magazine (1) or the loading tray (4) to set the disc tray in a disc play position and taking in said disc tray (2) to the magazine (1) or the loading tray (4), and
second drive means (23, 24, 24a, 4a) taking in/out the loading tray (4) to/from a player body,
CHARACTERIZED IN THAT IT FURTHER COMPRISES :
an epicyclic gear mechanism (19, 20, 21, 22) comprising an input gear (19) and first and second output gears (22, 20), wherein the input gear (19) is coupled to a motor (16), the first output gear (22) is coupled to said first drive means (25, 10, 10a) and the second output gear (20) is coupled to said second drive means (23, 24, 24a, 4a); and
locking means (15, 15b, 15c) for selectively locking either one of said first and second output gears (22, 20) according to the disc tray position status,
so that either one of the disc tray take-in/out operation and the loading tray take-in/out operation is selectively performed by the motor activation.

2. A multidisc player in accordance with claim 1 further comprising third drive means (8, 8a, 8b) for moving the disc tray (2) vertically to the disc tray taking-in/out operation by said first drive means, wherein said locking means (15) is operated by said third drive means (8) for selectively locking to the output gears (20, 22).

3. A multidisc player in accordance with claim 2, wherein said third drive means (8) drives a mechanism (321, 322, 319, 318) to open and close a door (326) which covers the front of the magazine (1) and/or loading tray (4).

## Patentansprüche

1. Mehrfachplattenspieler, versehen mit einem Magazin (1), das eine Vielzahl von Plattentabletts (2) beinhaltet,
einem Ladetablett (4), das ein einzelnes Plattentablett (2) beinhaltet,
einer ersten Antriebseinrichtung (10, 10a, 25) zum Entnehmen der Plattentabletts (2) aus dem Ladetablettmagazin (1) oder dem Ladetablett (4), um das Plattentablett in eine Plattenspielposition zu bringen und um dieses Plattentablett (2) in das Magazin (1) oder in das Ladetablett (4) einzubringen,
und einer zweiten Antriebseinrichtung (23, 24, 24a, 4a), die das Ladetablett (4) in ein Spielergehäuse einbringt oder daraus entnimmt,
dadurch **gekennzeichnet**, daß er ferner umfaßt:
einen Planetengetriebemechanismus (19, 20, 21, 22) mit einem Antriebsritzel (19) und einem ersten und einem zweiten Abtriebsritzels (22, 20), wobei das Antriebsritzel (19) mit einem Motor (16) gekoppelt ist, das erste Abtriebsritzel (22) mit der ersten Antriebseinrichtung (25, 10, 10a) gekoppelt ist und das zweite Abtriebsritzel (20) mit der zweiten Antriebseinrichtung (23, 24 24a, 4a) gekoppelt ist; und
eine Arretiereinrichtung (15, 15b, 15c) zum selektiven Arretieren entweder des ersten oder des zweiten Abtriebsritzels (22, 20) entsprechend dem Plattentablettpositionsstatus,
so daß mittels der Motoransteuerung entweder der Plattentablett-Einbring-/Entnahmebetrieb oder der Ladetablett-Einbring-/Entnahmebetrieb selektiv ausgeführt wird.

2. Mehrplattenspieler nach Anspruch 1, ferner umfassend eine dritte Antriebseinrichtung (8, 8a, 8b) zum Bewegen des Plattentabletts (2) vertikal zu dem Plattentablett-Einbring/Entnahmebetrieb mittels der ersten Antriebseinrichtung, wobei die Arretiereinrichtung (15) von der dritten Antriebseinrichtung (8) betrieben wird, um die Abtriebsritzel (20, 22) selektiv zu arretieren.

3. Mehrplattenspieler nach Anspruch 2, bei dem die dritte Antriebseinrichtung (8) einen Mechanismus (321, 322, 319, 318) zum Öffnen und Schließen einer Tür (326) antreibt, die die Front des Magazins (1) und/oder des Ladetabletts (4) überdeckt.

## Revendications

1. Tourne-disque multiple pourvu d'un magasin (1), qui contient une pluralité de plateaux à disque (2),
un plateau de chargement (4) qui contient un seul plateau à disque (2),
des premiers moyens d'entraînement (10, 10a, 25) pour sortir les plateaux à disque (2) du magasin (1) du plateau de chargement (4) pour amener le plateau à disque dans une position de lecture de disque et pour faire entrer ledit plateau à disque (2) dans le magasin (1) ou le plateau de chargement (4), et
des deuxièmes moyens d'entraînement (23, 24, 24a, 4a) faisant entrer/sortir le plateau de chargement (4) dans/du corps de tourne-disque,
caractérisé en ce qu'il comporte en outre :
un mécanisme d'engrenage planétaire (19, 20, 21, 22) comprenant un engrenage d'entrée (19) et des premier et deuxième engrenages de sortie (22, 20), où l'engrenage d'entrée (19) est accouplé à un moteur (16), le premier engrenage de sortie (22) étant accouplé auxdits premiers moyens d'entraînement (25, 10, 10a) et le deuxième engrenage de sortie (20) est accouplé auxdits deuxièmes moyens d'entraînement (23, 24, 24a, 4a) ; et
des moyens de verrouillage (15, 15b, 15c) pour verrouiller sélectivement l'un quelconque desdits premiers et deuxièmes engrenages de sortie (22, 20) conformément à la position dans laquelle se trouve le plateau à disque,
de telle sorte que l'une parmi l'opération d'entrée/de sortie de plateau à disque et l'opération d'entrée/de sortie de plateau de chargement est sélectivement exécutée par l'actionnement du moteur.

2. Tourne-disque multiple selon la revendication 1, comprenant en outre un troisième moyen d'entraînement (8, 8a, 8b) pour déplacer le plateau à disque (2) verticalement à l'opération d'entrée/de sortie du plateau à disque par lesdits premiers moyens d'entraînement, dans lequel lesdits moyens de verrouillage (15) sont actionnés par lesdits troisièmes moyens d'entraînement (8) en vue d'un verrouillage sélectif aux engrenages de sortie (20, 22).

3. Tourne-disque multiple selon la revendication 2, dans lequel lesdits troisièmes moyens d'entraînement (8) entraînent un mécanisme (321, 322, 319, 318) pour ouvrir et fermer une porte (326) qui couvre l'avant du magasin (1) et/ou le plateau de chargement (4).
